Europäisches Patentamt

**European Patent Office**

**Office européen des brevets**

(19)

(11) Publication number: **0 012 581**
**B1**

(12)
# EUROPEAN PATENT SPECIFICATION

(45) Date of publication of patent specification: **21.03.84**

(51) Int. Cl.³: **B 44 F 1/04,** B 44 F 11/06, B 44 C 1/20 //G09F3/00

(21) Application number: **79302821.8**

(22) Date of filing: **07.12.79**

(54) Decorative emblems and method for making same.

(30) Priority: **11.12.78 US 968280**

(43) Date of publication of application:
**25.06.80 Bulletin 80/13**

(45) Publication of the grant of the patent:
**21.03.84 Bulletin 84/12**

(84) Designated Contracting States:
**DE FR GB IT**

(56) References cited:
**DE - A - 2 731 081**
**FR - A - 2 235 001**
**US - A - 3 654 062**
**US - A - 4 087 570**
**US - A - 4 100 010**
**US - A - 4 139 654**

(73) Proprietor: **THE D.L.AULD COMPANY**
**1209 North Fifth Street**
**Columbus Ohio 43201 (US)**

(72) Inventor: **Auld, David L.**
**1209 North Fifth Street**
**Columbus Ohio 43201 (US)**
Inventor: **Waugh, Robert E.**
**3287 Somerford Road**
**Columbus Ohio 43221 (US)**

(74) Representative: **Warren, Francis Charles et al,**
**Baron & Warren 18 South End Kensington**
**London W8 5BU (GB)**

Courier Press, Leamington Spa, England.

Decorative emblems and method for making same

The present invention relates to decorative emblems, plaques and panels, hereinafter generally referred to as "emblems", which have a cured plastic layer deposited onto a decorative surface having an integral bezel, and to a method for making the same.

Decorative emblems are widely used throughout a number of industries, including the automotive and appliance fields. In the past, a colored vitreous frit was flowed into a bronze substrate and fired at 677°C. The glass-like vitreous enamel served to beautify the product and protect the decorative substrate from weathering when the emblem was exposed to the environment.

Today, plastics are primarily used for producing such emblems. For example, the Applicants have since 1966 produced an emblem having a molded or cast body into which plastic is deposited. A description of such products can be found in an article in the July-August, 1972, issue of the *duPont Magazine*.

Likewise, in US—A—3,654,062, there is disclosed a process for injection molding a decorative Mylar® facing sheet over a vinyl plastic body. The resulting plaque has an integral bezel but does not have a lens cap. Rather, the vinyl plastic body which is contiguous with the peripheral bezel is coated with a layer of protective varnish on the outer surface of the facing sheet. US—A—3,246,066, is similar in that male and female molds are used to form a cavity into which a decorative foil is placed and into which a clear plastic material is injected. Prior to injecting a clear plastic material against the front face of the foil, the foil is precoated. Other molding processes, such as compression molding (either one or two shot), are also well known in the art. See for instance, US—A—2,244,565; US—A—2,931,119; US—A—3,075,249; and US—A—3,114,597.

In US—A—4,100,010, assigned to the Applicants, there is disclosed an improved process for producing decorative emblems. That process involves casting a plastic material onto decorative foil shapes to form a meniscus which when cured gives a lens effect to the top surface of the foil shape. A problem with that process is that the then capped substrate does not usually make up a complete decorative emblem. Normally, the capped substrate will be used as an insert to be placed inside a decorative bezel, which is most commonly a highly polished die casting, or plastic or plated plastic or some other decorative substance.

In such a process, it is thus necessary to decorate the substrate, emboss the decorated substrate, if desired, apply a pressure-sensitive adhesive to the back of the substrate, cast the plastic material onto the top surface of the substrate, and then insert that capped decorated substrate into a separately manufactured decorated bezel. As can be seen this involves a large number of process steps, many requiring the work of skilled craftsmen.

US—A—4,087,570, also now assigned to the Applicants, discloses a process similar to that of US—A—4,100,010, but utilizes a radiation curable resin. According to one embodiment a medallion-like article comprising a foil substrate bearing a printed decorative design covered by a meniscus-shaped cured plastic lens cap is bonded to a metal base plate. In addition, that patent states that, as an alternative embodiment, the emblem can be cast directly into the body of an appliance for example. While this alternative embodiment does not require formation of a separate bezel and insert, neither does it produce a separate emblem which can be attached to an intended surface.

Accordingly, the need exists for a more efficient method of forming an improved emblem which can be attached to an intended surface but which does not require separate bezel and insert formation.

The present invention meets that need by utilizing a decorative surface having an integral bezel formed peripherally around it. That is, a decorated foil substrate such as metal (e.g. aluminium) foil, laminated metal foil, or metalized plastic foil is formed peripherally around the decorative design with an integral bezel having an appearance similar to the bezel within which an emblem insert would normally be placed. The substrate comprising the decorative design and integral bezel is attached to a backing plate and a fluent plastic material is cast onto the decorative surface to form a meniscus which is contiguous with the peripheral bezel. The cast plastic, when cured, gives a lens effect to the decorative surface beneath it.

The decorative surface can be prepared by a number of means. Preferably, the design is applied by silk screen or lithographic printing. It is often desirable to prime the top surface of the substrate prior to printing. Any suitable primer may be used, such as a silane primer.

It is also desirable to enhance the design of the decorative surface by embossing. Actually, the embossing may be done during the same forming step used to produce the integral bezel. Since the bezel is contiguous to the decorative surface and exists around the periphery thereof, it is a simple matter to form the peripheral bezel and emboss the central decorative surface in a single stamping operation.

It is preferred that such forming features take place on a thin gauge foil. As such, it is desirable to wrap the formed foil around a backing plate. The backing plate may be, for example, made of injection-molded plastic.

The attachment means may then be a part of or connected to the backing plate. It has been found that an edge adhesive strip gives a good adhesion and moisture seal of the emblem of the present invention, particularly when that emblem is applied to an uneven surface. The edge adhesive strip may be a double-sided pressure-sensitive adhesive tape or a bead of pressure sensitive adhesive which is applied into a peripheral groove formed in the backing plate.

An alternative is to use an overal adhesive coating on the back of the emblem or tabs, pins, etc. may be used. The tabs or connecting pins may be formed in or attached to the backing plate for the foil emblem. It is also possible to do without the backing plate by forming tabs into the edge of the foil. When applied to a substrate these tabs may, then, be inserted into a receiving slot and bent to complete the attachment as is a common practice. At any rate, there is provided a means for attachment of the emblem onto the ultimately desired surface whether it be an automobile, appliance, or other object.

The end result is a decorative emblem of unique beauty which is resistant to the environment of its intended use. Basically, this is because the preferred fluent plastic cast onto the decorative surface has the property of hardness without brittleness and withstands heavy abuse from strong detergents and from impact. It can withstand rigid water and humidity tests, salt and acid tests, hot and cold temperature tests, and gas tests.

The plastic is preferably a fluent polyurethane of two component parts (polyol and isocyanate) which are mixed immediately prior to coating and cure upon heating. A polyurethane of this type is disclosed in US—A—4,100,010. In formulating the particular plastic composition from among those disclosed in US—A—4,100,010, it is helpful to use a catalyst which results in a somewhat slow curing time in order to allow the liquid plastic to flow to its full extent, i.e., to completely cover the decorative surface and stop at the peripheral bezel before curing is accomplished.

Likewise, the polyurethane may be compounded from among the components listed in US—A—4,100,010 as is known to give a more flexible cured plastic. For most of the types of plastic contemplated, curing will be by irradiation with infrared or ultraviolet light. The polyurethane compounds mentioned above are heat curable and, thus, infrared lamps are used; although, obviously other heat sources may also be used.

In this way, there is produced an emblem that has been formed essentially from a single piece of substrate material, but which has the same general appearance of emblems previously produced by inserting a plastic capped decorative substrate into a separate bezel. The economy of the present invention over the prior art should be apparent.

The invention will now be further described, by way of example, with reference to the accompanying drawings, in which:—

Fig. 1 is a front view of one design of emblem according to the present invention having a decorative surface and an integral bezel.

Fig. 2 is a cross-sectional view of one embodiment of the emblem of the present invention.

Fig. 3 is a cross-sectional view of another embodiment of the emblem of the present invention.

Fig. 4 is a perspective view of the casting system for depositing the fluent plastic capping material onto the decorative surface of the emblem.

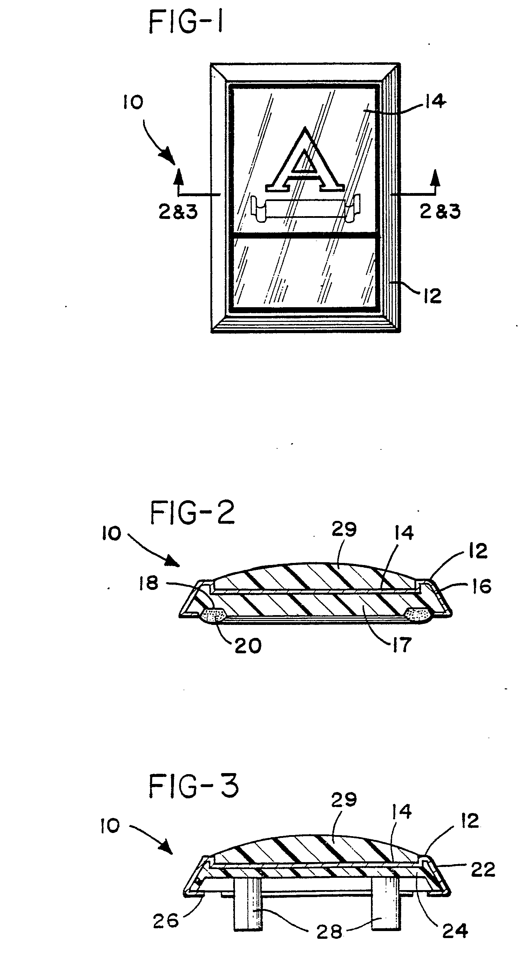

Referring to Fig. 1, there is shown an emblem 10 according to the present invention. An emblem of the type shown may be considered by some to be a plaque rather than an emblem, but for the purpose of this discussion, no distinction will be made. It should be apparent that either emblems or plaques or even panels may be made in the same manner disclosed herein. Accordingly, the term emblem will be used to cover all such items.

Emblem 10 has a peripheral bezel 12 and a centrally located decorative surface 14. The integral bezel is better shown in the cross-sectional representation of Figs. 2—3, which illustrate two embodiments of the emblem of the present invention.

In Fig. 2, bezel 12 is shown formed in a thin gauge metal foil 16, which is wrapped around a backing plate 17 having grooves 18 formed therein. That figure also shows a pressure-sensitive adhesive bead 20 located in grooves 18. As mentioned previously, the edge adhesive strip may also be a two-sided pressure-sensitive adhesive tape which is fitted into grooves 18. In each case, a release liner (not shown) such as a silicone or fluorocarbon treated paper will cover the edge adhesive strip until it is removed prior to application of the emblem to the intended surface.

An alternative embodiment is shown in Fig. 3. There a thin gauge metal substrate 22 is formed with an integral bezel 12 in the same manner. That forming may be by standard die stamping techniques and may include the aspect of embossing decorative surface 14 at the same time. The embossing can also take place in a separate operation, if so desired.

The formed substrate of Fig. 3 is attached to backing plate 24 as in Fig. 2. The attachment may be by physical means such as bending lips 26 around backing plate 24 or by other means, such as adhesive. Backing plate 24 may be an injection molded rigid plastic having connecting pins 28 extending therefrom. Connecting pins 28 are pressure fitted into holes drilled into the surface onto which the emblem is to be displayed. This is an example of another type of means of attaching the finished emblem to the intended object. Of course, others may also be used.

Before the emblem is completed, however, plastic lens cap 29 is deposited over decorative surface 14. This may be done either before or after the backing plate of Fig. 2 and 3 is attached to the foil substrate. Lens cap 29 is shown in Figs. 2 and 3. As shown, it takes the form of a meniscus which is contiguous with the peripheral bezel 12 and completely covers decorative surface 14. An appropriate amount of fluent plastic is deposited onto decorative surface 14 and allowed to flow to the peripheral bezel 12 and form the meniscus. It is then cured, preferably by infrared or UV irradiation.

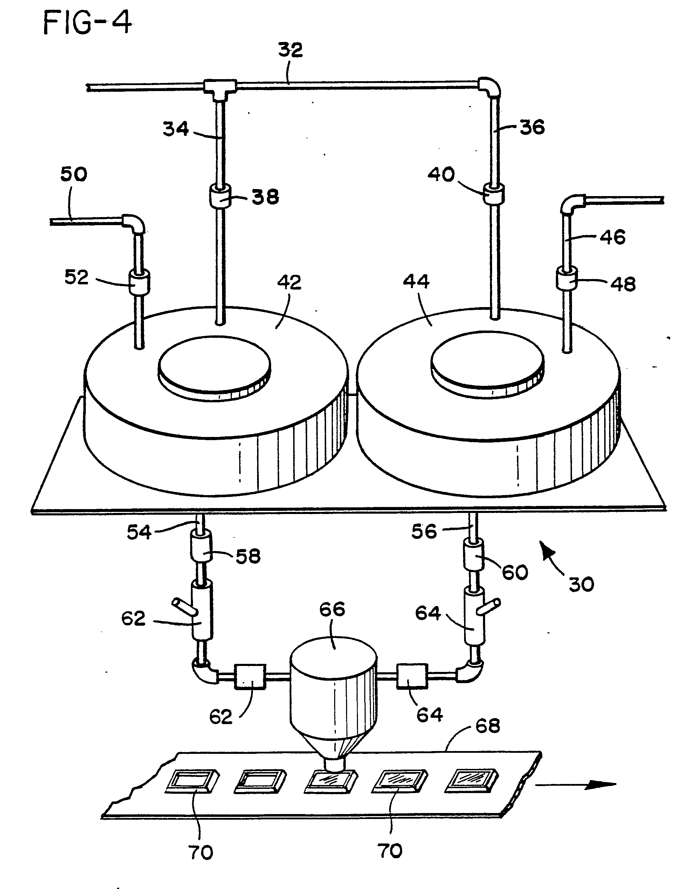

The preferred system for doing this is shown in Fig. 4. The casting apparatus is designated generally 30. A vacuum line 32 is connected via lines 34 and 36 to storage-degassing tanks 42 and 44, respectively. A pair of ball valves 38 and 40 are inserted in lines 34 and 36 to insure against any air going back into the tanks. Supply lines 50 and 46, having ball valves 52 and 48 therein, supply component Part A and Part B to tanks 42 and 44, respectively. Parts A and B are preferably portions of a two-component polyurethane plastic.

This may be a mixture of "A" and "B" components of the type disclosed in US—A—4,100,010. Basically, that mixture is one of a polyether polyol component ("A"), which may be a difunctional, trifunctional and/or tetrafunctional polypropylene glycol containing a suitable catalyst, and a diisocyanate component ("B") such as an aliphatic diisocyanate. A catalyst such as a lead material is used since it promotes a slow cure at room temperature so as to allow time for full flow of the liquid polyurethane before setting. As stated in US—A—4,100,010 an example of the diisocyanate is Hylene W® from E. I. duPont de Nemours and Co., and the polyether polyol may be one or more of the Pluracol® materials (P-410 or TP-440) from BASF Wyandotte. It may also be a polyether-polyester polyol combination, use of the polyester polyol making the cured polyurethane more flexible. The ratio of components A:B is preferably 50—60:40—50. A polyester polyol or polylactone polyol could be used in place of the polyether polyol.

The mixture of "A" and "B" components of this type cures, through catalytic action, under heat such as produced by infrared radiation. Accordingly, this type of arrangement will be disclosed as the preferred embodiment; although, single component, photocurable, polyurethanes of known types could also be used.

The "A" and "B" materials can be stirred in tanks 42 and 44 of Fig. 4 for the purpose of degassing. The degassed material then flows down pipes 54, 56 through ball valves 58, 60 through filters 62, 64 through metering devices 62' and 64' and into mixing and casting head 66 which is of a standard design.

Located beneath the casting head is a moving conveyor 68 with which the casting head 66 is timed. The conveyor carries the formed foil substrates to be cast, such as 70. When a substrate comes under the casting head, the belt stops. A predetermined amount of the plastic material is cast and then the conveyor moves the next substrate into position. The cast substrates are moved forward into baking areas containing infrared lamps. The substrates are then cooled and unloaded.

In this way, there is produced a decorative emblem which has all of the features of the emblems of the past, but is easier to produce because of the integral bezel formed in the foil substrate. As a result, a number of otherwise costly manufacturing steps can be eliminated. This provides significant advantages in an industry such as the one described.

**Claims**

1. A decorative emblem for attachment to an intended surface, such as an automobile or an appliance, comprising a base plate, a foil substrate attached to said base plate and having a decorative design printed or otherwise applied to its exposed surface, and a meniscus-shaped cured plastic lens cap cast directly over said decorative design, characterised in that the foil substrate (16, 22) has an integral bezel (12) formed peripherally around said decorative design (14) contiguous with the cured plastic lens cap (29) and the base plate has the shape of an emblem and forms a backing plate for the foil substrate and its bezel, whereby the bezel provides an appearance similar to the bezel within which an emblem insert would normally be placed, and the decorative emblem may be attached to the intended surface without requiring the use of a separate bezel.

2. A decorative emblem as claimed in Claim 1, characterised in that, said foil substrate (16, 22) is a metal foil, e.g. an aluminium foil.

3. A decorative emblem as claimed in Claim 1 or 2, characterised in that, said decorative surface (14) of said foil substrate is embossed.

4. A decorative emblem as claimed in Claim 1, 2 or 3, characterised in that, said backing plate (17) has grooves (18) formed therein opposite said peripheral bezel (12), and an edge adhesive strip (20) located in said grooves.

5. A decorative emblem as claimed in Claim 4, characterised in that, said edge adhesive strip (20) is either a pressure-sensitive adhesive bead or a two-sided pressure-sensitive adhesive tape.

6. A decorative emblem as claimed in Claim 1, 2 or 3, characterised in that, said backing plate (24) has connecting pins (28) extending therefrom.

7. A decorative emblem as claimed in any preceding claim, characterised in that the foil substrate has lips (26) bent around the backing plate.

8. A method for producing a decorative emblem which can be attached to an intended surface, such as an automobile or an appliance, comprising a foil substrate having a decorative design printed on one surface thereof and attached to a base plate, said decorative surface having a meniscus-shaped cured plastic lens cap cast directly over the decorative design, characterised by forming the foil substrate (16, 22) bearing the printed decorative design (14) into an emblem shape with an integral bezel (12) peripherally around said decorative design, attaching the side of the formed foil substrate opposite said decorative surface to a backing plate (17, 24) having the same emblem shape, casting a fluent plastic material (29) directly on to the decorative surface so that it completely covers the decorative design and forms a meniscus the edges of which are contiguous with said peripheral bezel (12), and curing the fluent plastic material to form the lens cap.

9. A method as claimed in Claim 8, further including embossing said decorative surface prior to casting said fluent plastic thereon.

10. A method as claimed in Claim 8 or 9, further including forming peripheral grooves into said backing plate so as to be located opposite said peripheral bezel, and placing into said grooves an edge adhesive strip.

**Patentansprüche**

1. Dekoratives Emblem für die Befestigung auf einer Oberfläche, wie einem Automobil oder einer Vorrichtung, mit einer Grundplatte, einem auf dieser Grundplatte befestigten Foliensubstrat und mit einer auf seiner freiliegenden Oberfläche aufgedruckten oder anderweitig aufgebrachten Dekoration sowie einer meniskusförmigen gehärteten Kunststofflinsenkappe, die direkt über der Dekoration gegossen wurde, dadurch gekennzeichnet, daß das Foliensubstrat (16, 22) eine am Umfang um die Dekoration (14) gebildete, an die gehärtete Kunststofflinsenkappe (29) angrenzende, aus einem Stück mit ihr bestehende Abschrägungsfläche (12) hat und die Grundplatte die Form eines Emblems besitzt und eine Stützplatte für das Foliensubstrat und seine Abschrägungsfläche bildet, wobei die Abschrägungsfläche ähnlich der Abschrägungsfläche aussieht, in welcher ein Emblemeinsatz normalerweise angeordnet wäre, und das dekorative Emblem auf der Oberfläche befestigt werden kann, ohne daß man eine getrennte Abschrägungsfläche verwenden muß.

2. Dekoratives Emblem nach Anspruch 1, dadurch gekennzeichnet, daß das Foliensubstrat (16, 22) eine Metallfolie, wie eine Aluminiumfolie ist.

3. Dekoratives Emblem nach Anspruch 1 oder 2, dadurch gekennzeichnet, daß die Dekoration (14) des Foliensubstrates eingeprägt ist.

4. Dekoratives Emblem nach Anspruch 1, 2 oder 3, dadurch gekennzeichnet, daß die Stützplatte (17) Nuten (18) besitzt, die darin gegenüber der ringsumlaufenden Abschrägungsfläche (12) ausgebildet sind, und daß eine Klebstreifenborte (20) in diesen Nuten angeordnet ist.

5. Dekoratives Emblem nach Anspruch 4, dadurch gekennzeichnet, daß die Klebstreifenborte (20) entweder ein druckempfindlicher Klebstoffwulst oder ein zweiseitig druckempfindlicher Klebstreifen ist.

6. Dekoratives Emblem nach Anspruch 1, 2 oder 3, dadurch gekennzeichnet, daß die Stützplatte (24) Verbindungsstifte (28) besitzt, die sich von ihr aus erstrecken.

7. Dekoratives Emblem nach einem der vorausgehenden Ansprüche, dadurch gekennzeichnet, daß das Foliensubstrat Lippen (26) besitzt, die um die Stützplatte herumgebogen sind.

8. Verfahren zur Herstellung eines dekorativen Emblems, das auf einer Oberfläche, wie einem Automobil oder einer Vorrichtung, befestigt werden kann und ein auf einer Grundplatte befestigtes Foliensubstrat mit einer auf einer Oberfläche von ihm aufgedruckten Dekoration besitzt, wobei die dekorative Oberfläche eine direkt über der Dekoration gegossene meniskusförmige gehärtete Kunststoffkappenlinse besitzt, dadurch gekennzeichnet, daß man das aufgedruckte Dekoration (14) tragende Foliensubstrat (16, 22) in eine Emblemform mit einer mit ihm aus einem Stück bestehenden, am Umfang um die Dekoration herumlaufenden Abschrägungsfläche (12) bringt, die Seite des gebildeten Foliensubstrats, die der dekorativen Oberfläche gegenüberliegt, an einer Stützplatte (17, 24) mit der gleichen Emblemform befestigt, ein flüssiges Kunststoffmaterial (29) direkt auf die dekorative Oberfläche derart aufgießt, daß es die Dekoration vollständig bedeckt und einen Meniskus bildet, dessen Kanten an die ringsumlaufende Abschrägungsfläche (12) angrenzen, und das flüssige Kunststoffmaterial unter Bildung der Linsenkappe härtet.

9. Verfahren nach Anspruch 8, bei dem man weiterhin die dekorative Oberfläche vor dem Aufgießen des flüssigen Kunststoffes auf ihr prägt.

10. Verfahren nach Anspruch 8 oder 9, bei dem man weiterhin ringsumlaufende Nuten in der Stützplatte derart ausbildet, daß sie gegenüber der ringsumlaufenden Schrägfläche angeordnet sind, und in diesen Nuten eine Klebstreifenborte anordnet.

**Revendications**

1. Emblème décoratif destiné à être fixé sur une surface de réception telle qu'une automobile ou un autre élément d'équipement et comprenant une plaque de support, une feuille de support fixée à ladite plaque de support et portant sur sa face exposée un dessin décoratif réalisé par impression ou une autre technique et un couvercle plastique courbe en forme de ménisque et formant lentille et qui est coulé directement au-dessus du dessin décoratif, caractérisé en ce que la feuille de support (16, 22) comprend une nervure de retenue périphérique (12) formée dans la feuille autour du dessin décoratif (14) et qui est en contact avec ledit couvercle formant lentille (29), la plaque de support (17) présentant une forme correspondant à celle d'un emblème et formant une plaque renforçant la feuille de support et sa nervure de sorte que la nervure a une apparence similaire à celle d'une nervure ou bague de retenue utilisée normalement pour retenir un emblème séparé et que l'emblème décoratif obtenu peut être fixé sur la surface de réception sans nécessiter une bague de retenue séparée.

2. Emblème décoratif suivant la revendication 1, caractérisé en ce que ladite feuille de support (16, 22) est une feuille de métal telle qu'une feuille d'aluminium.

3. Emblème décoratif suivant l'une quelconque des revendications 1 et 2, caractérisé en ce que la face décorative (14) de ladite feuille de support est gaufrée.

4. Emblème décoratif suivant l'une quelconque des revendications 1 à 3, caractérisé en ce que ladite plaque de support (17) comprend sur sa face opposée à la nervure périphérique (12) des rainures (18) dans lesquelles est logée une bande (20) présentant un bord adhésif.

5. Emblème décoratif suivant la revendication 4, caractérisé en ce que ladite bande à bord adhésif (20) est constituée d'un profilé adhésif ou d'une bande adhésive double face.

6. Emblème décoratif suivant l'une quelconque des revendications 1 à 3, caractérisé en ce que ladite plaque de support (24) comporte des tiges de fixation (28) faisant saillie sur cette plaque.

7. Emblème décoratif suivant l'une quelconque des revendications 1 à 6, caractérisé en ce que ladite feuille de support comprend des lèvres (26) repliées autour de la plaque de support.

8. Procédé pour la fabrication d'un emblème décoratif destiné à être fixé sur une surface de réception telle qu'une automobile ou un autre élément d'équipement et comprenant une plaque de support, une feuille de support fixée à ladite plaque de support et portant sur sa face exposée un dessin décoratif réalisé par impression ou une autre technique et un couvercle plastique courbe en forme de ménisque et formant lentille et qui est coulé au-dessus du dessin décoratif, caractérisé en ce qu'il consiste à former la feuille de support (16, 22) portant le dessin décoratif imprimé (14) pour lui donner la forme de l'emblème et pour former la nervure (12) entourant le dessin décoratif, à fixer la face opposée audit dessin décoratif de la feuille de support sur une plaque de support (17, 24) présentant la même forme d'emblème, à couler une matière plastique à l'état fluide (29) directement sur la surface décorée pour couvrir totalement le dessin décoratif et former un ménisque dont les bords sont en contact avec ladite rainure périphérique et à faire durcir la matière plastique pour former le couvercle formant lentille.

9. Procédé suivant la revendication 8, caractérisé en ce qu'il consiste à gaufrer la surface décorative avant le coulage de la matière plastique à l'état fluide sur cette surface.

10. Procédé suivant l'une quelconque des revendications 8 et 9, caractérisé en ce qu'il consiste à former dans ladite plaque de support des rainures périphériques opposées à ladite nervure et à disposer dans lesdites rainures une bande à bord adhésif.

**0 012 581**

# FIG-1

# FIG-2

# FIG-3

1

FIG-4